(19) **Europäisches Patentamt / European Patent Office / Office européen des brevets**

(11) **EP 4 692 666 A1**

(12) **EUROPEAN PATENT APPLICATION**
published in accordance with Art. 153(4) EPC

(43) Date of publication:
**11.02.2026 Bulletin 2026/07**

(21) Application number: **24825686.9**

(22) Date of filing: **30.05.2024**

(51) International Patent Classification (IPC):
*F24F 11/77* (2018.01)    *F24F 7/06* (2006.01)
*F24F 7/007* (2006.01)    *F24F 7/08* (2006.01)
*F24F 11/83* (2018.01)    *F24F 11/86* (2018.01)

(52) Cooperative Patent Classification (CPC):
Y02B 30/56

(86) International application number:
**PCT/JP2024/019867**

(87) International publication number:
**WO 2024/262279 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023 JP 2023100634**

(71) Applicant: **Daikin Industries, Ltd.
Osaka-shi, Osaka 530-0001 (JP)**

(72) Inventors:
• **NOBORITATE Wataru
  Osaka-shi, Osaka 530-0001 (JP)**
• **NAKANO Akihiro
  Osaka-shi, Osaka 530-0001 (JP)**

(74) Representative: **Hoffmann Eitle
Patent- und Rechtsanwälte PartmbB
Arabellastraße 30
81925 München (DE)**

(54) **AIR CONDITIONING SYSTEM**

(57) An air conditioning system (50) includes a ventilating apparatus (10a, 10b), an air conditioning apparatus (200a, 200c), and a controller (100). The ventilating apparatus supplies outdoor air to a room, and discharges indoor air to the outside of the room. The ventilating apparatus has a first heat exchanger (21) configured to exchange heat between the outdoor air and the indoor air, and a second heat exchanger (25) configured to exchange heat between the outdoor air and a heat medium. The air conditioning apparatus is capable of executing multiple operating modes. The controller changes the operation of the ventilating apparatus according to the operating mode executed by the air conditioning apparatus.

FIG.7

## Description

TECHNICAL FIELD

The present disclosure relates to an air conditioning system.

BACKGROUND ART

There has been known an air conditioning system including an air conditioning apparatus and a ventilating apparatus. This air conditioning system is disclosed in, for example, Patent Document 1. In Patent Document 1, the ventilating apparatus includes a heat exchanger configured to exchange heat between outdoor air supplied to room and indoor air discharged to the outside of the room. Patent Document 1 describes that the amount of air supplied by the ventilating apparatus is adjusted depending on whether the air conditioning apparatus is in operation or stopped.

CITATION LIST

PATENT DOCUMENT

Patent Document 1: Japanese Unexamined Patent Publication No. 2012-172961

SUMMARY OF THE INVENTION

TECHNICAL PROBLEM

In the air conditioning system of Patent Document 1, whether the air conditioning apparatus is in operation or stopped is taken into consideration in the control of the ventilating apparatus. For this reason, in the known air conditioning system, there is a possibility that the operation of the entire air conditioning system cannot be appropriately controlled.

An object of the present disclosure is to appropriately control an air conditioning system including an air conditioning apparatus and a ventilating apparatus.

SOLUTION TO THE PROBLEM

A first aspect of the present disclosure is directed to an air conditioning system (50) including: a ventilating apparatus (10a, 10b) that has a first heat exchanger (21) configured to exchange heat between outdoor air and indoor air and a second heat exchanger (25) configured to exchange heat between the outdoor air having passed through the first heat exchanger (21) and a heat medium and that is configured to supply the outdoor air to a room and discharge the indoor air to an outside of the room; an air conditioning apparatus (200a, 200c) that has a third heat exchanger (225) configured to exchange heat between the indoor air and the heat medium and that is configured to be capable of executing multiple operating modes; and a controller (100) configured to change an operation of the ventilating apparatus (10a, 10b) according to an operating mode executed by the air conditioning apparatus (200a, 200c).

In the first aspect, the ventilating apparatus (10a, 10b) supplies the outdoor air having passed through the first heat exchanger (21) and the second heat exchanger (25) in this order to the room. The controller (100) changes the operation of the ventilating apparatus (10a, 10b) according to the operating mode executed by the air conditioning apparatus (200a, 200c). Thus, it is possible to operate the ventilating apparatus (10a, 10b) in an appropriate state according to the operating mode executed by the air conditioning apparatus (200a, 200c), thereby appropriately controlling the air conditioning system (50).

A second aspect of the present disclosure is an embodiment of the first aspect. In the second aspect, the controller (100) changes an amount of heat exchange in the second heat exchanger (25) of the ventilating apparatus (10a, 10b) according to the operating mode executed by the air conditioning apparatus (200a, 200c).

In the second aspect, the controller (100) operates to change the state of the outdoor air supplied to the room by the ventilating apparatus (10a, 10b) according to the operating mode executed by the air conditioning apparatus (200a, 200c).

A third aspect of the present disclosure is an embodiment of the second aspect. In the third aspect, the operating mode executable by the air conditioning apparatus (200a, 200c) includes a room air heating mode in which the indoor air is heated in the third heat exchanger (225), the ventilating apparatus (10a, 10b) is capable of executing an outside air heating mode in which the outdoor air is heated in the second heat exchanger (25), and when the air conditioning apparatus (200a, 200c) starts the room air heating mode while the ventilating apparatus (10a, 10b) is executing the outside air heating mode, the controller (100) decreases an amount of heating in the second heat exchanger (25) of the ventilating apparatus (10a, 10b), or stops heating of the outdoor air in the second heat exchanger (25).

In the third aspect, when the air conditioning apparatus (200a, 200c) starts the room air heating mode while the ventilating apparatus (10a, 10b) is executing the outside air heating mode, the controller (100) changes the amount of heating of the outdoor air in the second heat exchanger (25) of the ventilating apparatus (10a, 10b). Thus, the proportion of a load processed by the third heat exchanger (225) of the air conditioning apparatus (200a, 200c) to a heating load of an indoor space increases, and the proportion of a load processed by the second heat exchanger (25) of the ventilating apparatus (10a, 10b) to the heating load decreases, as compared to a case where the controller (100) does not change the amount of heating of the outdoor air in the second heat exchanger (25) of the ventilating apparatus (10a, 10b).

A fourth aspect of the present disclosure is an embodiment of the second aspect. In the fourth aspect, the operating mode executable by the air conditioning apparatus (200a, 200c) includes a room air cooling mode in which the indoor air is cooled in the third heat exchanger (225), and when the air conditioning apparatus (200a, 200c) starts the room air cooling mode in a state in which cooling of the outdoor air in the second heat exchanger (25) of the ventilating apparatus (10a, 10b) is stopped, the controller (100) causes the second heat exchanger (25) to start cooling the outdoor air.

In the fourth aspect, when the air conditioning apparatus (200a, 200c) starts the room air cooling mode in a state in which cooling of the outdoor air in the second heat exchanger (25) of the ventilating apparatus (10a, 10b) is stopped, the controller (100) causes the second heat exchanger (25) to start cooling the outdoor air. Thus, the proportion of the load processed by the third heat exchanger (225) of the air conditioning apparatus (200a, 200c) to a cooling load of the indoor space (5) decreases, and the proportion of the load processed by the second heat exchanger (25) of the ventilating apparatus (10a, 10b) to the cooling load increases, as compared to a case where the cooling of the outdoor air in the second heat exchanger (25) of the ventilating apparatus (10a, 10b) is kept stopped.

A fifth aspect of the present disclosure is an embodiment of the first aspect. In the fifth aspect, the operating mode executable by the air conditioning apparatus (200a, 200c) includes a room air cooling mode in which the indoor air is cooled in the third heat exchanger (225), the ventilating apparatus (10a, 10b) is capable of executing an outside air cooling mode in which the outdoor air is cooled in the second heat exchanger (25), and in a state in which the air conditioning apparatus (200a, 200c) executes the room air cooling mode and the ventilating apparatus (10a, 10b) executes the outside air cooling mode, a temperature of the third heat exchanger (225) is higher than a temperature of the second heat exchanger (25).

In the fifth aspect, in a state in which the air conditioning apparatus (200a, 200c) executes the room air cooling mode and the ventilating apparatus (10a, 10b) executes the outside air cooling mode, the load processed by the third heat exchanger (225) of the air conditioning apparatus (200a, 200c) in the cooling load of the indoor space is relatively low, and the load processed by the second heat exchanger (25) of the ventilating apparatus (10a, 10b) in the cooling load is relatively high.

A sixth aspect of the present disclosure is an embodiment of any one of the first to fifth aspects. In the sixth aspect, a volume of the third heat exchanger (225) of the air conditioning apparatus (200a, 200c) is greater than a volume of the second heat exchanger (25) of the ventilating apparatus (10a, 10b).

Generally, a heat exchanger having a greater volume has a higher heat exchange capacity. Thus, in the sixth aspect, a heat exchange capacity of the third heat exchanger (225) of the air conditioning apparatus (200a, 200c) is higher than that of the second heat exchanger (25) of the ventilating apparatus (10a, 10b).

A seventh aspect of the present disclosure is an embodiment of any one of the first to sixth aspects. In the seventh aspect, even when the air conditioning apparatus (200a, 200c) is stopped while the ventilating apparatus (10a, 10b) is operating, the controller (100) continuously operates the ventilating apparatus (10a, 10b).

In the seventh aspect, even after the air conditioning apparatus (200a, 200c) has been stopped during the operation of the ventilating apparatus (10a, 10b), the controller (100) continuously operates the ventilating apparatus (10a, 10b). Thus, the indoor space is continuously ventilated regardless of the state of the air conditioning apparatus (200a, 200c).

An eighth aspect of the present disclosure is an embodiment of the seventh aspect. In the eighth aspect, after the air conditioning apparatus (200a, 200c) has been stopped, the controller (100) causes the ventilating apparatus (10a, 10b) to execute an operation identical to an operation executed by the ventilating apparatus (10a, 10b) before activation of the air conditioning apparatus (200a, 200c).

In the eighth aspect, after the air conditioning apparatus (200a, 200c) has been stopped, the controller (100) returns the operation executed by the ventilating apparatus (10a, 10b) to the operation executed by the ventilating apparatus (10a, 10b) before the activation of the air conditioning apparatus (200a, 200c).

A ninth aspect of the present disclosure is an embodiment of any one of the first to eighth aspects. In the ninth aspect, the ventilating apparatus (10a, 10b) includes a sensor (105) configured to measure the temperature and humidity of the outdoor air flowing toward the second heat exchanger (25) after having passed through the first heat exchanger (21), and the controller (100) changes an amount of heat exchange in the second heat exchanger (25) based on a measurement value of the sensor (105).

In the ninth aspect, the amount of heat exchange in the second heat exchanger (25) is changed based on the temperature and humidity of the outdoor air flowing toward the second heat exchanger (25) after having passed through the first heat exchanger (21).

BRIEF DESCRIPTION OF THE DRAWINGS

[FIG. 1] FIG. 1 is a schematic view of a configuration of a house in which an air conditioning system is placed.
[FIG. 2] FIG. 2 is a piping system diagram illustrating a configuration of a refrigerant circuit of an air conditioning apparatus.
[FIG. 3] FIG. 3 is a piping system diagram illustrating a configuration of a refrigerant circuit of a ventilating apparatus.

[FIG. 4] FIG. 4 is a cross-sectional view of a schematic configuration of a ventilation unit of the ventilating apparatus.

[FIG. 5] FIG. 5 is a block diagram illustrating the configurations of a ventilation controller of the ventilating apparatus and an air conditioning controller of the air conditioning apparatus.

[FIG. 6] FIGS. 6A and 6B illustrate tables of operations performed by the ventilation controller of the ventilating apparatus. FIG. 6A illustrates a first automatic selection operation, and FIG. 6B illustrates a second automatic selection operation.

[FIG. 7] FIG. 7 is a timing chart illustrating a change in the operation of the ventilating apparatus at the start and end of a heating mode of the air conditioning apparatus.

[FIG. 8] FIG. 8 is a timing chart illustrating a change in the operation of the ventilating apparatus at the start and end of a cooling mode or a dehumidification mode of the air conditioning apparatus.

[FIG. 9] FIG. 9 is a schematic perspective view of a typical fin-and-tube air heat exchanger.

[FIG. 10] FIG. 10 is a schematic side view of the typical fin-and-tube air heat exchanger.

[FIG. 11] FIG. 11 is a timing chart illustrating a change in the operation of the ventilating apparatus at the start and end of the heating mode of the air conditioning apparatus in Variation (1) of the embodiment.

DESCRIPTION OF EMBODIMENTS

An air conditioning system (50) of an embodiment will be described.

-Air Conditioning System and House-

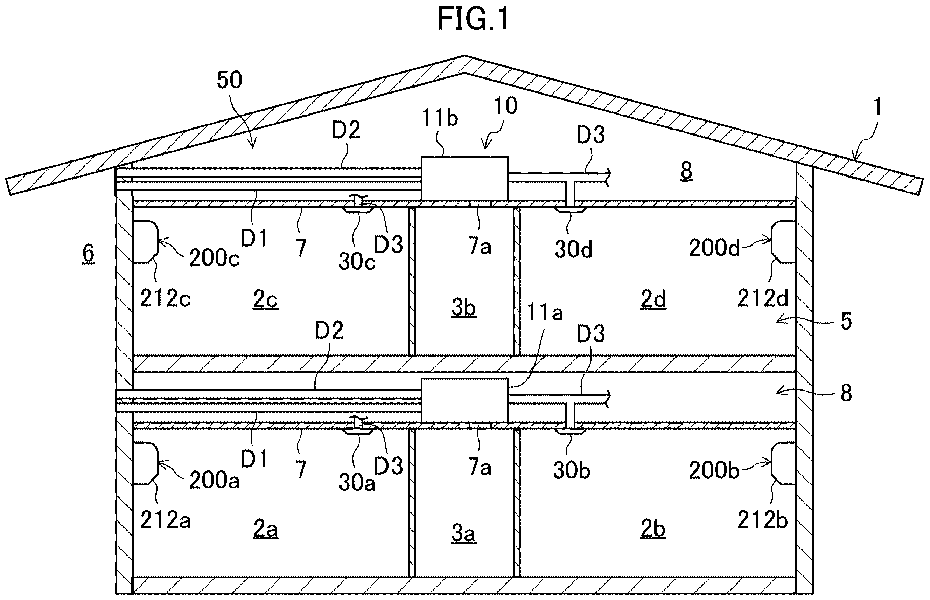

As illustrated in FIG. 1, the air conditioning system (50) of this embodiment is placed in a house (1). The air conditioning system (50) includes four air conditioning apparatuss (200a to 200d) and two ventilating apparatuss (10a, 10b). The number of air conditioning apparatuss (200a to 200d) and the number of ventilating apparatuss (10a, 10b) are merely examples.

In the house (1) in which the air conditioning system (50) is placed, habitable rooms (2a to 2d) such as a living room and a private room and non-habitable rooms (3a, 3b) such as a corridor and a toilet are formed on the first floor and the second floor. These habitable rooms (2a to 2d) and non-habitable rooms (3a, 3b) form an indoor space (5). Moreover, in the house, an plenum space (8) is formed above a ceiling panel (7) on each of the first floor and the second floor.

-Configuration of Air conditioning apparatus-

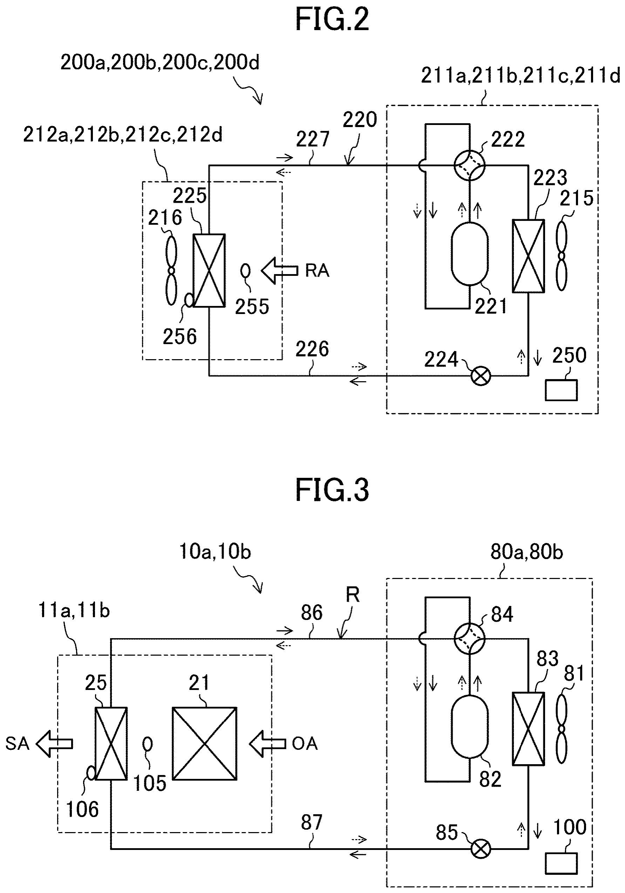

As illustrated in FIG. 2, each of the air conditioning apparatuss (200a to 200d) includes one outdoor unit (211a to 211d) and one indoor unit (212a to 212d). The first air conditioning apparatus (200a) includes the first outdoor unit (211a) and the first indoor unit (212a). The second air conditioning apparatus (200b) includes the second outdoor unit (211b) and the second indoor unit (212b). The third air conditioning apparatus (200c) includes the third outdoor unit (211c) and the third indoor unit (212c). The fourth air conditioning apparatus (200d) includes the fourth outdoor unit (211d) and the fourth indoor unit (212d).

As illustrated in FIG. 1, the indoor units (212a to 212d) of the air conditioning apparatuss (200a to 200d) are placed in different habitable rooms (2a to 2d). Specifically, the first indoor unit (212a) is placed in the first habitable room (2a), the second indoor unit (212b) is placed in the second habitable room (2b), the third indoor unit (212c) is placed in the third habitable room (2c), and the fourth indoor unit (212d) is placed in the fourth habitable room (2d). Each of the indoor units (212a to 212d) of this embodiment is a wall-mounted indoor unit.

The outdoor units (211a to 211d) of the air conditioning apparatuss (200a to 200d) are placed in an outdoor space (6). In FIG. 1, the outdoor units (211a to 211d) are not shown.

<Outdoor Unit>

As illustrated in FIG. 2, each of the outdoor units (211a to 211d) includes a compressor (221), a switching mechanism (222), an outdoor heat exchanger (223), and an expansion valve (224). Further, each of the outdoor units (211a to 211d) includes an outdoor fan (215) and an air conditioning controller (250).

The outdoor heat exchanger (223) is a fin-and-tube air heat exchanger. The outdoor heat exchanger (223) exchanges heat between refrigerant as a heat medium and outdoor air. The switching mechanism (222) is a four-way switching valve having four ports. The switching mechanism (222) switches between a first state in which a first port communicates with a third port and a second port communicates with a fourth port (state indicated by a solid line in FIG. 2) and a second state in which the first port communicates with the fourth port and the second port communicates with the third port (state indicated by a broken line in FIG. 2).

<Indoor Unit>

Each of the indoor units (212a to 212d) includes an indoor heat exchanger (225) and an indoor fan (216). Further, each of the indoor units (212a to 212d) includes an indoor temperature sensor (255) and a heat exchanger temperature sensor (256).

The indoor heat exchanger (225) is a third heat exchanger configured to exchange heat between the refrigerant as the heat medium and indoor air. The indoor heat exchanger (225) is a fin-and-tube air heat exchanger. The indoor temperature sensor (255) measures the temperature of the indoor air before the indoor air passes through the indoor heat exchanger (225). The heat exchanger temperature sensor (256) is attached to a heat transfer tube forming the indoor heat exchanger (225), and measures the evaporation temperature and condensation temperature of the refrigerant in the indoor heat exchanger (225).

<Refrigerant Circuit>

In each of the air conditioning apparatuss (200a to 200d), the outdoor unit (211a to 211d) and the indoor unit (212a to 212d) are connected to each other by a liquid-side connection pipe (226) and a gas-side connection pipe (227). In each of the air conditioning apparatuss (200a to 200d), the outdoor unit (211a to 211d), the indoor unit (212a to 212d), the liquid-side connection pipe (226), and the gas-side connection pipe (227) form a refrigerant circuit (220).

In the refrigerant circuit (220), a discharge pipe of the compressor (221) is connected to the first port of the switching mechanism (222), and a suction pipe of the compressor (221) is connected to the second port of the switching mechanism (222). The third port of the switching mechanism (222) is connected to a gas-side end of the outdoor heat exchanger (223). The fourth port of the switching mechanism (222) is connected to a gas-side end of the indoor heat exchanger (225) via the gas-side connection pipe (227). A liquid-side end of the outdoor heat exchanger (223) is connected to one end of the expansion valve (224). The other end of the expansion valve (224) is connected to a liquid-side end of the indoor heat exchanger (225) via the liquid-side connection pipe (226).

<Air Conditioning Controller>

Each of the air conditioning apparatuss (200a to 200d) includes the air conditioning controller (250). In each of the air conditioning apparatuss (200a to 200d), the air conditioning controller (250) is housed in the outdoor unit (211a to 211d).

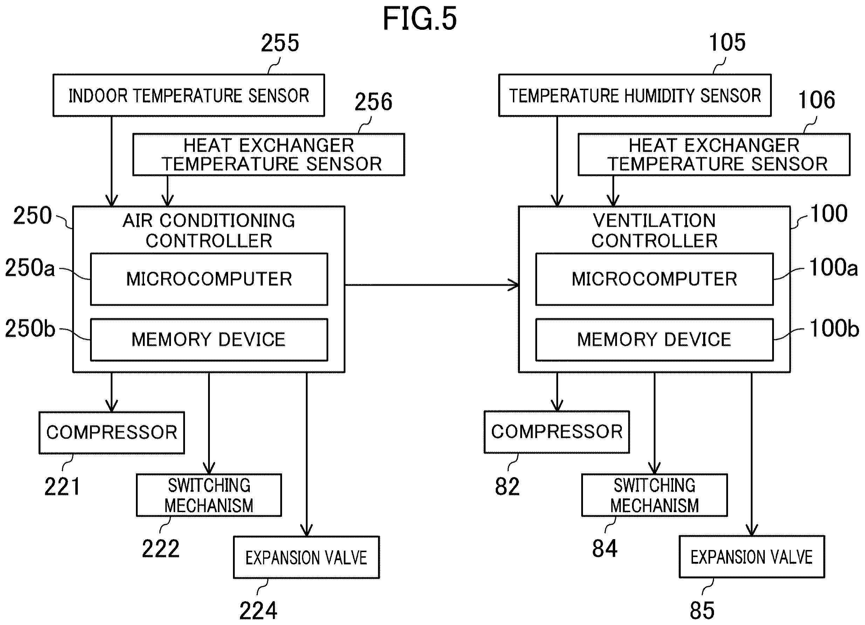

As illustrated in FIG. 5, the air conditioning controller (250) includes a microcomputer (250a) mounted on a control board, and a memory device (250b) storing software for operating the microcomputer (250a). The memory device (250b) is a semiconductor memory. The air conditioning controller (250) receives a measurement value of the indoor temperature sensor (255) and a measurement value of the heat exchanger temperature sensor (256).

The air conditioning controller (250) controls devices forming the air conditioning apparatus (200a to 200d). For example, the air conditioning controller (250) controls the operation frequency of the compressor (221) such that the measurement value of the indoor temperature sensor (255) is kept at a set temperature. Moreover, the air conditioning controller (250) operates the switching mechanism (222) according to an operating mode designated by a user.

-Operation of Air conditioning apparatus-

Each of the air conditioning apparatuss (200a to 200d) is capable of executing multiple operating modes. Specifically, each of the air conditioning apparatuss (200a to 200d) is capable of executing a cooling mode, a dehumidification mode, a heating mode, and a fan mode.

<Cooling Mode, Dehumidification Mode>

The cooling mode and the dehumidification mode are a room air cooling mode in which the indoor heat exchanger (225) cools the indoor air.

In each of the cooling mode and the dehumidification mode, the switching mechanism (222) is in the first state, the compressor (221) is operated, and the refrigerant circulates through the refrigerant circuit (220). In addition, the outdoor fan (215) and the indoor fan (216) are operated. In the refrigerant circuit (220), a refrigeration cycle is performed, the outdoor heat exchanger (223) functions as a condenser, and the indoor heat exchanger (225) functions as an evaporator.

In the indoor heat exchanger (225) functioning as the evaporator, the indoor air is cooled, and the temperature of the indoor air decreases. Moreover, in the indoor heat exchanger (225), moisture contained in the indoor air is condensed, and the absolute humidity of the indoor air decreases. Each of the indoor units (212a to 212d) blows out the indoor air cooled in the indoor heat exchanger (225) to the corresponding habitable room (2a to 2d).

<Heating Mode>

The heating mode is a room air heating mode in which the indoor heat exchanger (225) heats the indoor air.

In the heating mode, the switching mechanism (222) is in the second state, the compressor (221) is operated, and the refrigerant circulates through the refrigerant circuit (220). In addition, the outdoor fan (215) and the indoor fan (216) are operated. In the refrigerant circuit (220), the refrigeration cycle is performed, the indoor heat exchanger (225) functions as a condenser, and the outdoor heat exchanger (223) functions as an evaporator.

In the indoor heat exchanger (225) functioning as the condenser, the indoor air is heated, and the temperature of the indoor air increases. Each of the indoor units (212a to 212d) blows out the indoor air heated in the indoor heat exchanger (225) to the corresponding habitable room (2a to 2d).

<Fan Mode>

The fan mode is an operating mode in which the indoor unit (212a to 212d) only blows air to the habitable room (2a to 2d).

In the fan mode, the compressor (221) and the outdoor fan (215) are stopped, and the indoor fan (216) is operated. In the fan mode, the cooling and heating of the indoor air in the indoor heat exchanger (225) are stopped. The indoor unit (212a to 212d) directly sends back the sucked indoor air to the habitable room (2a to 2d).

-Configuration of Ventilating apparatus-

As illustrated in FIG. 3, each of the ventilating apparatuss (10a, 10b) includes one ventilation unit (11a, 11b) and one heat source unit (80a, 80b). The first ventilating apparatus (10a) includes the first ventilation unit (11a) and the first heat source unit (80a). The second ventilating apparatus (10b) includes the second ventilation unit (11b) and the second heat source unit (80b).

As illustrated in FIG. 1, the first ventilation unit (11a) is placed in the plenum space (8) on the first floor of the house (1), and the second ventilation unit (11b) is placed in the plenum space (8) on the second floor of the house (1). In FIG. 1, the heat source units (80a, 80b) are not shown.

An outside air duct (D1), an air discharge duct (D2), and an air supply duct (D3) are connected to each of the ventilation units (11a, 11b). The outside air duct (D1) has an inflow end opened to the outdoor space (6) and an outflow end connected to the corresponding ventilation unit (11a, 11b). The air discharge duct (D2) has an inflow end connected to the corresponding ventilation unit (11a, 11b) and an outflow end opened to the outdoor space (6). The air supply duct (D3) has an inflow end connected to the corresponding ventilation unit (11a, 11b).

Four air supply units (30a to 30d) are provided on the ceiling panel (7) in the house (1). The number of air supply units (30a to 30d) described here is merely an example.

The first air supply unit (30a) and the second air supply unit (30b) are connected to the first ventilation unit (11a) via the air supply duct (D3). The first air supply unit (30a) blows out the air supplied from the first ventilation unit (11a) to the first habitable room (2a). The second air supply unit (30b) blows out the air supplied from the first ventilation unit (11a) to the second habitable room (2b).

The third air supply unit (30c) and the fourth air supply unit (30d) are connected to the second ventilation unit (11b) via the air supply duct (D3). The third air supply unit (30c) blows out the air supplied from the second ventilation unit (11b) to the third habitable room (2c). The fourth air supply unit (30d) blows out the air supplied from the second ventilation unit (11b) to the fourth habitable room (2d).

<Heat Source Unit>

As illustrated in FIG. 3, each of the heat source units (80a, 80b) includes a compressor (82), a switching mechanism (84), a heat-source-side heat exchanger (83), and an expansion valve (85). Further, each of the heat source units (80a, 80b) includes a heat-source-side fan (81) and a ventilation controller (100).

The heat-source-side heat exchanger (83) is a fin-and-tube air heat exchanger. The heat-source-side heat exchanger (83) exchanges heat between the refrigerant as the heat medium and the outdoor air. The switching mechanism (84) is a four-way switching valve having four ports. The switching mechanism (84) switches between a first state in which a first port communicates with a third port and a second port communicates with a fourth port (state indicated by a solid line in FIG. 3) and a second state in which the first port communicates with the fourth port and the second port communicates with the third port (state indicated by a broken line in FIG. 3).

<Ventilation Unit>

Each of the ventilation units (11a, 11b) includes a total heat exchanger (21) and a utilization-side heat exchanger (25), and ventilates the indoor space (5). Further, each of the ventilation units (11a, 11b) includes a temperature humidity sensor (105) and a heat exchanger temperature sensor (106). A detailed structure of each of the ventilation units (11a, 11b) will be described later.

<Refrigerant Circuit>

In each of the ventilating apparatuss (10a, 10b), the heat source unit (80a, 80b) and the ventilation unit (11a, 11b) are connected to each other by a liquid-side connection pipe (87) and a gas-side connection pipe (86). In each of the ventilating apparatuss (10a, 10b), the heat source unit (80a, 80b), the ventilation unit (11a, 11b), the liquid-side connection pipe (87), and the gas-side connection pipe (86) form a refrigerant circuit (R).

In the refrigerant circuit (R), a discharge pipe of the compressor (82) is connected to the first port of the switching mechanism (84), and a suction pipe of the compressor (82) is connected to the second port of the switching mechanism (84). The third port of the switching mechanism (84) is connected to a gas-side end of the heat-source-side heat exchanger (83). The fourth port of the switching mechanism (84) is connected to a gas-side end of the utilization-side heat exchanger (25) via the gas-side connection pipe (86). A liquid-side end of the heat-source-side heat exchanger (83) is connected to one end of the expansion valve (85). The other end of the expansion valve (85) is connected to a liquid-side end of the utilization-side heat exchanger (25) via the liquid-side connection pipe (87).

<Ventilation Controller>

Each of the ventilating apparatuss (10a, 10b) includes the ventilation controller (100). In each of the ventilating apparatuss (10a, 10b), the ventilation controller (100) is housed in the heat source unit (80a, 80b). The ventilation controller (100) may be housed in the ventilation unit (11a, 11b).

As illustrated in FIG. 5, the ventilation controller (100) includes a microcomputer (100a) mounted on a control board, and a memory device (100b) storing software for operating the microcomputer (100a). The memory device (100b) is a semiconductor memory. The ventilation controller (100) receives a measurement value of the temperature humidity sensor (105) and a measurement value of the heat exchanger temperature sensor (106).

The ventilation controller (100) controls devices forming the ventilating apparatus (10a, 10b). For example, the ventilation controller (100) controls the operation of the compressor (82) based on the measurement value of the temperature humidity sensor (105). Moreover, the ventilation controller (100) is capable of executing a first automatic control operation and a second automatic control operation. A detailed operation of the ventilation controller (100) will be described later.

The ventilation controller (100) of each of the ventilating apparatuss (10a, 10b) is capable of communicating with the air conditioning controller (250) of the corresponding air conditioning apparatus (200a to 200d). The ventilation controller (100) of each of the ventilating apparatuss (10a, 10b) receives operation information on the operating state of the corresponding air conditioning apparatus (200a to 200d) from the air conditioning controller (250) of the corresponding air conditioning apparatus (200a to 200d). The ventilation controller (100) is a controller configured to change the operation of the ventilating apparatus (10a, 10b) based on the received operation information.

-Configuration of Ventilation Unit-

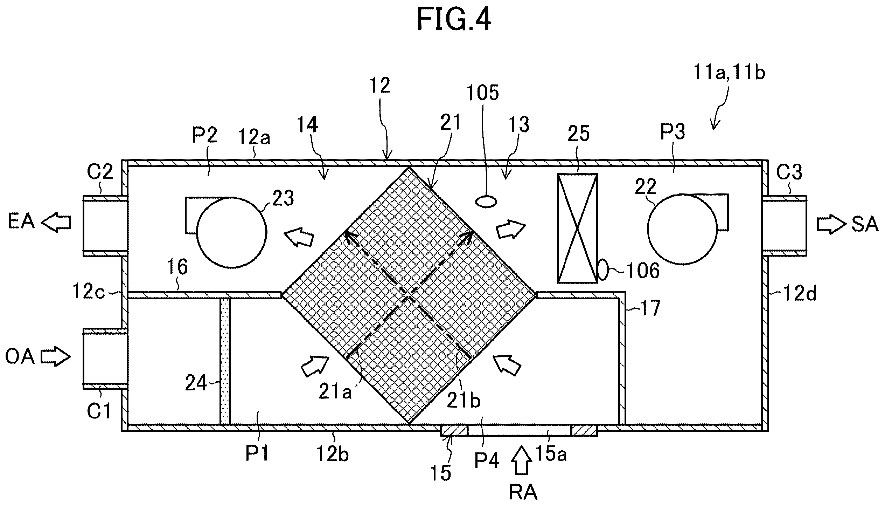

As illustrated in FIG. 4, each of the ventilation units (11a, 11b) has a casing (12). The casing (12) of each of the ventilation units (11a, 11b) has an air supply path (13) and an air discharge path (14). Moreover, the casing (12) of each of the ventilation units (11a, 11b) houses an air supply fan (22), an air discharge fan (23), the total heat exchanger (21), and the utilization-side heat exchanger (25).

<Casing>

As illustrated in FIG. 4, the casing (12) has a rectangular parallelepiped shape. The casing (12) has a top plate (12a), a bottom plate (12b), and four side plates. The four side plates include a first side plate (12c) and a second side plate (12d) facing each other.

The top plate (12a) forms the upper surface of the casing (12). The bottom plate (12b) forms the lower surface of the casing (12). The first side plate (12c) forms the side surface of the casing (12) on one end side in the longitudinal direction thereof. The second side plate (12d) forms the side surface of the casing (12) on the other end side in the longitudinal direction thereof.

The first side plate (12c) is provided with a first duct joint (C1) and a second duct joint (C2). The first duct joint (C1) and the second duct joint (C2) are formed in a tubular shape. The first duct joint (C1) and the second duct joint (C2) protrude laterally from the outer surface of the first side plate (12c). The outflow end of the outside air duct (D1) is connected to the first duct joint (C1). The inflow end of the air discharge duct (D2) is connected to the second duct joint (C2).

The second side plate (12d) is provided with a third duct joint (C3). The third duct joint (C3) is formed in a tubular shape. The third duct joint (C3) protrudes laterally from the outer surface of the second side plate (12d). The inflow end of the air supply duct (D3) is connected to the third duct joint (C3).

The bottom plate (12b) of the casing (12) is provided with an indoor panel (15). As illustrated in FIG. 1, the indoor panel (15) is provided inside a ventilation opening (7a) penetrating the ceiling panel (7). The indoor panel (15) faces the indoor space (5). The indoor panel (15) has a suction port (15a). The suction port (15a) formed in the casing (12) of the first ventilation unit (11a) allows the inflow end of the air discharge path (14) to communicate with the non-habitable room (3a) on the first floor. The suction port (15a) formed in the casing (12) of the second ventilation unit (11b) allows the inflow end of the air discharge path (14) to communicate with the non-habitable room (3b) on the second floor.

<Partition Plate>

As illustrated in FIG. 4, a first partition plate (16) and a second partition plate (17) are provided inside the casing (12). The first partition plate (16) partitions a space between the first side plate (12c), the top plate (12a), the bottom plate (12b), and the total heat exchanger (21) into a first flow path (P1) and a second flow path (P2). The first flow path (P1) communicates with the first duct joint (C1). The first flow path (P1) forms a portion of the air supply path (13) located upstream of the total heat exchanger (21). The second flow path (P2) communicates with the second duct joint (C2). The second flow path (P2) forms a portion of the air discharge path (14) located downstream of the total heat exchanger (21).

The second partition plate (17) partitions a space between the second side plate (12d), the top plate (12a), the bottom plate (12b), and the total heat exchanger (21) into a third flow path (P3) and a fourth flow path (P4). The third flow path (P3) communicates with the third duct joint (C3). The third flow path (P3) forms a portion of the air supply path (13) located downstream of the total heat exchanger (21). The fourth flow path (P4) is connected to the suction port (15a) of the indoor panel (15). The fourth flow path (P4) forms a portion of the air discharge path (14) located upstream of the total heat exchanger (21).

<Total Heat Exchanger>

The total heat exchanger (21) is a first heat exchanger configured to exchange heat between the outdoor air supplied to the room and the indoor air discharged to the outside of the room.

The total heat exchanger (21) is a cross-flow heat exchanger. The total heat exchanger (21) exchanges heat between the air flowing through the air supply path (13) and the air flowing through the air discharge path (14). The total heat exchanger (21) has therein an air-supply-side internal flow path (21a) and an air-discharge-side internal flow path (21b). The air-supply-side internal flow path (21a) and the air-discharge-side internal flow path (21b) extend in directions orthogonal to each other.

An inflow portion of the air-supply-side internal flow path (21a) is joined to the first flow path (P1). An outflow portion of the air-supply-side internal flow path (21a) is joined to the third flow path (P3). An inflow portion of the air-discharge-side internal flow path (21b) is joined to the fourth flow path (P4). An outflow portion of the air-discharge-side internal flow path (21b) is joined to the second flow path (P2).

The total heat exchanger (21) transfers heat between the air in the air-supply-side internal flow path (21a) and the air in the air-discharge-side internal flow path (21b). The total heat exchanger (21) transfers moisture between the air in the air-supply-side internal flow path (21a) and the air in the air-discharge-side internal flow path (21b). In this manner, the total heat exchanger (21) exchanges both sensible heat and latent heat between the air in the air-supply-side internal flow path (21a) and the air in the air-discharge-side internal flow path (21b).

<Air Supply Fan and Air Discharge Fan>

The air supply fan (22) is disposed in the second flow path (P2). The air discharge fan (23) is disposed in the third flow path (P3). The air supply fan (22) transfers air in the air supply path (13). The air discharge fan (23) transfers air in the air discharge path (14). The air supply fan (22) and the air discharge fan (23) are of a sirocco type. The air supply fan (22) and the air discharge fan (23) may be of a turbo type or a propeller type.

<Filter>

The ventilation unit (11a, 11b) has a filter (24). The filter (24) is disposed in the first flow path (P1). In other words, the filter (24) is disposed upstream of the total heat exchanger (21) in the air supply path (13). The filter (24) collects dust in the outdoor air (OA).

<Utilization Heat Exchanger>

The utilization-side heat exchanger (25) is a second heat exchanger configured to exchange heat between the outdoor air having passed through the total heat exchanger (21) and the refrigerant as the heat medium. The utilization-side heat exchanger (25) is a fin-and-tube air heat exchanger.

The utilization-side heat exchanger (25) is disposed in the third flow path (P3). The utilization-side heat exchanger (25) is disposed downstream of the total heat exchanger (21) in the air supply path (13). The utilization-side heat exchanger (25) is disposed between the air-supply-side internal flow path (21a) and the air supply fan (22) in the third flow path (P3).

<Sensor>

As described above, the temperature humidity sensor (105) and the heat exchanger temperature sensor (106) are provided in each of the ventilation units (11a, 11b).

As illustrated in FIG. 4, the temperature humidity sensor (105) is provided between the total heat exchanger (21) and the utilization-side heat exchanger (25) in the third flow path (P3). The temperature humidity sensor (105) measures the temperature and relative humidity of the air (outdoor air) flowing toward the utilization-side heat exchanger (25) after having passed through the total heat exchanger (21). Instead of the temperature humidity sensor (105), a temperature sensor configured to measure only the temperature of the air and a humidity sensor configured to measure only the relative humidity of the air may be provided in each of the ventilation units (11a, 11b).

The heat exchanger temperature sensor (106) is attached to a heat transfer tube forming the utilization-side heat exchanger (25), and configured to measure the evaporation temperature and condensation temperature of the refrigerant in the utilization-side heat exchanger (25).

-Operation of Ventilating apparatus-

Each of the ventilating apparatuss (10a, 10b) is capable of executing multiple operating modes. Specifically, each of the ventilating apparatuss (10a, 10b) is capable of executing a cooling ventilation mode, a heating ventilation mode, and a simple ventilation mode.

<Cooling Ventilation Mode>

The cooling ventilation mode is an outside air cooling mode in which the outdoor air is cooled in the utilization-side heat exchanger (25).

In the cooling ventilation mode, the switching mechanism (84) is in the first state, the compressor (82) is operated, and the refrigerant circulates through the refrigerant circuit (R). In the cooling ventilation mode, the compressor (82) operates at a constant rotational speed. In the refrigerant circuit (R), the refrigeration cycle is performed, the heat-source-side heat exchanger (83) functions as a condenser, and the utilization-side heat exchanger (25) functions as an evaporator. Moreover, in the cooling ventilation mode, the air supply fan (22) and the air discharge fan (23) are operated.

In the ventilation unit (11a, 11b), the outdoor air flows into the first flow path (P1) through the outside air duct (D1), and the indoor air flows into the fourth flow path (P4) through the suction port (15a).

In the total heat exchanger (21), the outdoor air having flowed in from the first flow path (P1) exchanges heat with the indoor air having flowed in from the fourth flow path (P4). In a case where the indoor space (5) is air-conditioned in summer, the temperature and humidity of the indoor air are usually lower than the temperature and humidity of the outdoor air, respectively. Thus, in the total heat exchanger (21), both heat and moisture (sensible heat and latent heat) are transferred from the outdoor air to the indoor air.

The outdoor air having passed through the total heat exchanger (21) is sent to the utilization-side heat exchanger (25). On the other hand, the indoor air having passed through the total heat exchanger (21) is discharged to the air discharge duct (D2) through the second flow path (P2).

In the utilization-side heat exchanger (25) functioning as the evaporator, the outdoor air having passed through the total heat exchanger (21) is cooled, and the temperature of the outdoor air decreases. Moreover, in the utilization-side heat exchanger (25), moisture contained in the outdoor air is condensed, and the absolute humidity of the outdoor air decreases. The ventilation unit (11a, 11b) supplies the outdoor air cooled in the utilization-side heat exchanger (25) to the habitable room (2a to 2d) via the air supply duct (D3).

<Heating Ventilation Mode>

The heating ventilation mode is an outside air heating mode in which the outdoor air is heated in the utilization-side heat exchanger (25).

In the heating ventilation mode, the switching mechanism (84) is in the second state, the compressor (82) is operated, and the refrigerant circulates through the refrigerant circuit (R). In the heating ventilation mode, the compressor (82) operates at a constant rotational speed. In the refrigerant circuit (R), the refrigeration cycle is performed, the utilization-side heat exchanger (25) functions as a condenser, and the heat-source-side heat exchanger (83) functions as an evaporator. Moreover, in the heating ventilation mode, the air supply fan (22) and the air discharge fan (23) are operated.

In the ventilation unit (11a, 11b), the outdoor air flows into the first flow path (P1) through the outside air duct (D1), and the indoor air flows into the fourth flow path (P4) through the suction port (15a).

In the total heat exchanger (21), the outdoor air having flowed in from the first flow path (P1) exchanges heat with the indoor air having flowed in from the fourth flow path (P4). In a case where the indoor space (5) is air-conditioned in winter, the temperature and humidity of the indoor air are usually higher than the temperature and humidity of the outdoor air, respectively. Thus, in the total heat exchanger (21), both heat and moisture (sensible heat and latent heat) are transferred from the indoor air to the outdoor air.

The outdoor air having passed through the total heat exchanger (21) is sent to the utilization-side heat exchanger (25). On the other hand, the indoor air having passed through the total heat exchanger (21) is discharged to the air discharge duct (D2) through the second flow path (P2).

In the utilization-side heat exchanger (25) functioning as the condenser, the outdoor air having passed through the total heat exchanger (21) is heated, and the temperature of the outdoor air increases. The ventilation unit (11a, 11b) supplies the outdoor air heated in the utilization-side heat exchanger (25) to the habitable room (2a to 2d) via the air supply duct (D3).

<Simple Ventilation Mode>

The simple ventilation mode is a mode in which ventilation is performed in a state in which the cooling and heating of the outdoor air in the utilization-side heat exchanger (25) are stopped.

In the simple ventilation mode, the compressor (82) is stopped, and the air supply fan (22) and the air discharge fan (23) are operated. In the refrigerant circuit (R), no refrigeration cycle is performed.

In the ventilation unit (11a, 11b), the outdoor air flows into the first flow path (P1) through the outside air duct (D1), and the indoor air flows into the fourth flow path (P4) through the suction port (15a). In the total heat exchanger (21), the outdoor air having flowed in from the first flow path (P1) exchanges heat with the indoor air having flowed in from the fourth flow path (P4). The outdoor air having passed through the total heat exchanger (21) is supplied to the habitable room (2a to 2d) via the air supply duct (D3) after having passed through the utilization-side heat exchanger (25). On the other hand, the indoor air having passed through the total heat exchanger (21) is discharged to the air discharge duct (D2) through the second flow path (P2).

-Operation of Ventilation Controller-

As described above, the ventilation controller (100) is capable of executing a first automatic selection operation and a second automatic selection operation.

Each of the first automatic selection operation and the second automatic selection operation is a control operation of automatically selecting the operating mode executed by the ventilating apparatus (10a, 10b) based on the measurement value of the temperature humidity sensor (105).

The ventilation controller (100) executes one of the first automatic selection operation or the second automatic selection operation, which is designated by the user. As will be described later, the ventilation controller (100) switches the operation between the first automatic selection operation and the second automatic selection operation based on the operation information received from the air conditioning controller (250) of the corresponding air conditioning apparatus (200a, 200c).

<First Automatic Selection Operation>

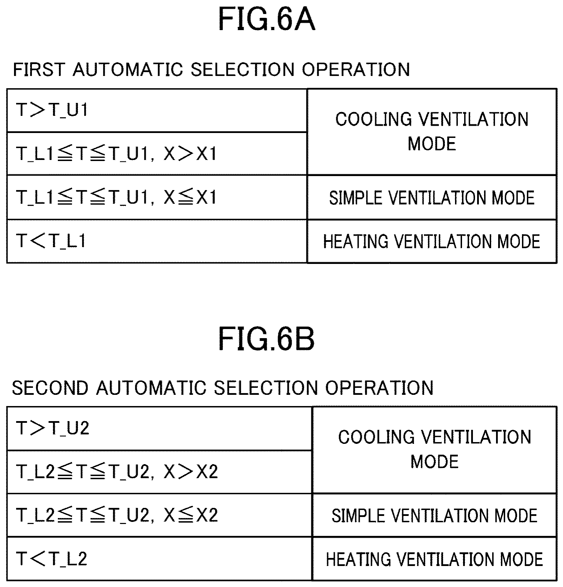

The first automatic selection operation of the ventilation controller (100) will be described with reference to FIG. 6A.

The ventilation controller (100) acquires a temperature T and a relative humidity H, which are the measurement values of the temperature humidity sensor (105). The temperature T and the relative humidity H are the temperature and relative humidity of the outdoor air flowing toward the utilization-side heat exchanger (25) after having passed through the total heat exchanger (21), respectively. The ventilation controller (100) calculates an absolute humidity X based on the acquired temperature T and relative humidity H.

In the first automatic selection operation, the ventilation controller (100) compares the temperature T with a first upper reference temperature T_U1 and a first lower reference temperature T_L1, and compares the absolute humidity X with a first reference absolute humidity X1.

In this embodiment, the first upper reference temperature T_U1 is 26°C, and the first lower reference temperature T_L1 is 18°C. The first reference absolute humidity X1 is the absolute humidity of humid air having a temperature of the first upper reference temperature T_U1 and a relative humidity of a first reference relative humidity H1. The first reference relative humidity H1 is 55%. These specific numerical values are merely examples.

When the temperature T is higher than the first upper reference temperature T_U1, the ventilation controller (100) causes the ventilating apparatus (10a, 10b) to execute the cooling ventilation mode. When the temperature T is the first lower reference temperature T_L1 or higher and the first upper reference temperature T_U1 or lower and the absolute humidity X is higher than the first reference absolute humidity X1, the ventilation controller (100) causes the ventilating apparatus (10a, 10b) to execute the cooling ventilation mode. When the temperature T is the first lower reference temperature T_L1 or higher and the first upper reference temperature T_U1 or lower and the absolute humidity X is the first reference absolute humidity X1 or lower, the ventilation controller (100) causes the ventilating apparatus (10a, 10b) to execute the simple ventilation mode. When the temperature T is lower than the first lower reference temperature T_L1, the ventilation controller (100) causes the ventilating apparatus (10a, 10b) to execute the heating ventilation mode.

<Second Automatic Selection Operation>

The second automatic selection operation of the ventilation controller (100) will be described with reference to FIG. 6B.

In the second automatic selection operation, the ventilation controller (100) acquires the temperature T and the relative humidity H, which are the measurement values of the temperature humidity sensor (105), and calculates the absolute humidity X based on the acquired temperature T and relative humidity H, as in the first automatic selection operation.

In the second automatic selection operation, the ventilation controller (100) compares the temperature T with a second upper reference temperature T_U2 and a second lower reference temperature T_L2, and compares the absolute humidity X with a second reference absolute humidity X2.

In this embodiment, the second upper reference temperature T_U2 is 30°C, and the second lower reference temperature T_L2 is 10°C. The second reference absolute humidity X2 is the absolute humidity of humid air having a temperature of the second upper reference temperature T_U2 and a relative humidity of a second reference relative humidity H2. The second reference relative humidity H2 is 65%. These specific numerical values are merely examples. The second upper reference temperature T_U2 is higher than the first upper reference temperature T_U1, the second lower reference temperature T_L2 is lower than the first lower reference temperature T_L1, and the second reference relative humidity H2 is higher than the first reference relative humidity H1.

When the temperature T is higher than the second upper reference temperature T_U2, the ventilation controller (100) causes the ventilating apparatus (10a, 10b) to execute the cooling ventilation mode. When the temperature T is the second lower reference temperature T_L2 or higher and the second upper reference temperature T_U2 or lower and the absolute humidity X is higher than the second reference absolute humidity X2, the ventilation controller (100) causes the ventilating apparatus (10a, 10b) to execute the cooling ventilation mode. When the temperature T is the second lower reference temperature T_L2 or higher and the second upper reference temperature T_U2 or lower and the absolute humidity X is the second reference absolute humidity X2 or lower, the ventilation controller (100) causes the ventilating apparatus (10a, 10b) to execute the simple ventilation mode. When the temperature T is lower than the second lower reference temperature T_L2, the ventilation controller (100) causes the ventilating apparatus (10a, 10b) to execute the heating ventilation mode.

As described above, the second upper reference temperature T_U2 is higher than the first upper reference temperature T_U1, the second lower reference temperature T_L2 is lower than the first lower reference temperature T_L1, and the second reference relative humidity H2 is higher than the first reference relative humidity H1. In other words, the second automatic selection operation is performed in wider ranges of the temperature and humidity when the ventilation controller (100) causes the ventilating apparatus (10a, 10b) to execute the simple ventilation mode than in the first automatic selection operation. Thus, assuming that a change in the air temperature in the outdoor space (6) over time is the same, a time during which the ventilating apparatus (10a, 10b) executes the simple ventilation mode (i.e., a time during which the compressor (82) is stopped) is longer during the execution of the second automatic selection operation than during the execution of the first automatic selection operation. Consequently, the second automatic selection operation is a control operation capable of reducing the energy consumption of the ventilating apparatus (10a, 10b) as compared to the first automatic selection operation.

-Cooperation of Ventilating apparatus and Air conditioning apparatus-

In the air conditioning system (50) of this embodiment, each of the ventilating apparatuss (10a, 10b) corresponds to one air conditioning apparatus (200a to 200d). Each of the ventilating apparatuss (10a, 10b) cooperates with the corresponding air conditioning apparatus (200a to 200d).

<Cooperation of First Ventilating apparatus and Air conditioning apparatus>

The first ventilating apparatus (10a) placed on the first floor of the house (1) corresponds to one of the first air conditioning apparatus (200a) or the second air conditioning apparatus (200b) for air-conditioning the habitable rooms (2a, 2b) on the first floor. In the air conditioning system (50) of this embodiment, the first ventilating apparatus (10a) corresponds to the first air conditioning apparatus (200a), and cooperates with the first air conditioning apparatus (200a).

In the air conditioning system (50) of this embodiment, the ventilation controller (100) of the first ventilating apparatus (10a) is communicable with the air conditioning controller (250) of the first air conditioning apparatus (200a) (see FIG. 5). The ventilation controller (100) of the first ventilating apparatus (10a) receives the operation information output from the air conditioning controller (250) of the first air conditioning apparatus (200a). The operation information output from the air conditioning controller (250) of the first air conditioning apparatus (200a) includes information indicating that the first air conditioning apparatus (200a) has started each of the cooling mode, the dehumidification mode, and the heating mode, and information indicating that the first air conditioning apparatus (200a) has ended each of the cooling mode, the dehumidification mode, and the heating mode.

When the ventilation controller (100) of the first ventilating apparatus (10a) receives the "information indicating that the first air conditioning apparatus (200a) has started the heating mode" as the operation information, the ventilation controller (100) executes the second automatic selection operation. When the ventilation controller (100) of the first ventilating apparatus (10a) receives, as the operation information, the "information indicating that the first air conditioning apparatus (200a) has started the cooling mode" or the "information indicating that the first air conditioning apparatus (200a) has started the dehumidification mode," the ventilation controller (100) executes the first automatic selection operation.

<Cooperation of Second Ventilating apparatus and Air conditioning apparatus>

The second ventilating apparatus (10b) placed on the second floor of the house (1) corresponds to one of the third air conditioning apparatus (200c) or the fourth air conditioning apparatus (200d) for air-conditioning the habitable rooms (2c, 2d) on the second floor. In the air conditioning system (50) of this embodiment, the second ventilating apparatus (10b) corresponds to the third air conditioning apparatus (200c), and cooperates with the third air conditioning apparatus (200c).

In the air conditioning system (50) of this embodiment, the ventilation controller (100) of the second ventilating apparatus (10b) is communicable with the air conditioning controller (250) of the third air conditioning apparatus (200c) (see FIG. 5). The ventilation controller (100) of the second ventilating apparatus (10b) receives the operation information output from the air conditioning controller (250) of the third air conditioning apparatus (200c).

The operation information output from the air conditioning controller (250) of the third air conditioning apparatus (200c) includes information indicating that the third air conditioning apparatus (200c) has started each of the cooling mode, the dehumidification mode, and the heating mode, and information indicating that the third air conditioning apparatus (200c) has ended each of the cooling mode, the dehumidification mode, and the heating mode.

When the ventilation controller (100) of the second ventilating apparatus (10b) receives the "information indicating that the third air conditioning apparatus (200c) has started the heating mode" as the operation information, the ventilation controller (100) executes the second automatic selection operation. When the ventilation controller (100) of the second ventilating apparatus (10b) receives, as the operation information, the "information indicating that the third air conditioning apparatus (200c) has started the cooling mode" or the "information indicating that the third air conditioning apparatus (200c) has started the dehumidification mode," the ventilation controller (100) executes the first automatic selection operation.

<Cooperation Related to Heating Mode of Air conditioning apparatus>

Cooperation between the ventilating apparatus (10a, 10b) and the air conditioning apparatus (200a, 200c) in relation to the heating mode of the air conditioning apparatus (200a, 200c) will be described in detail. Here, the cooperation between the first ventilating apparatus (10a) and the first air conditioning apparatus (200a) will be described, but the same also applies to the cooperation between the second ventilating apparatus (10b) and the third air conditioning apparatus (200c).

The air conditioning controller (250) of the first air conditioning apparatus (200a) outputs the "information indicating that the first air conditioning apparatus (200a) has started the heating mode" as the operation information when the first air conditioning apparatus (200a) is activated and starts the heating mode and when the operating mode executed by the first air conditioning apparatus (200a) is switched from the mode other than the heating mode (for example, fan mode) to the heating mode.

When the ventilation controller (100) of the first ventilating apparatus (10a) receives the "information indicating that the first air conditioning apparatus (200a) has started the heating mode" as the operation information, the ventilation controller (100) performs the second automatic selection operation. In a case where the ventilation controller (100) is executing an operation other than the second automatic selection operation at the time of receiving the operation information, the ventilation controller (100) switches the operation to be executed to the second automatic selection operation. On the other hand, in a case where the ventilation controller (100) is executing the second automatic selection operation at the time of receiving the operation information, the ventilation controller (100) continuously executes the second automatic selection operation.

When the ventilation controller (100) of the first ventilating apparatus (10a) receives the "information indicating that the first air conditioning apparatus (200a) has ended the heating mode" as the operation information, the ventilation controller (100) performs the same operation as the operation performed by the first air conditioning apparatus (200a) immediately before the start of the heating mode. In a case where the operation performed by the first air conditioning apparatus (200a) immediately before the start of the heating mode is different from the second automatic selection operation, the ventilation controller (100) ends the second automatic selection operation, and starts the operation performed by the first air conditioning apparatus (200a) immediately before the start of the heating mode. On the other hand, in a case where the second automatic selection operation is performed immediately before the first air conditioning apparatus (200a) starts the heating mode, the ventilation controller (100) continuously executes the second automatic selection operation.

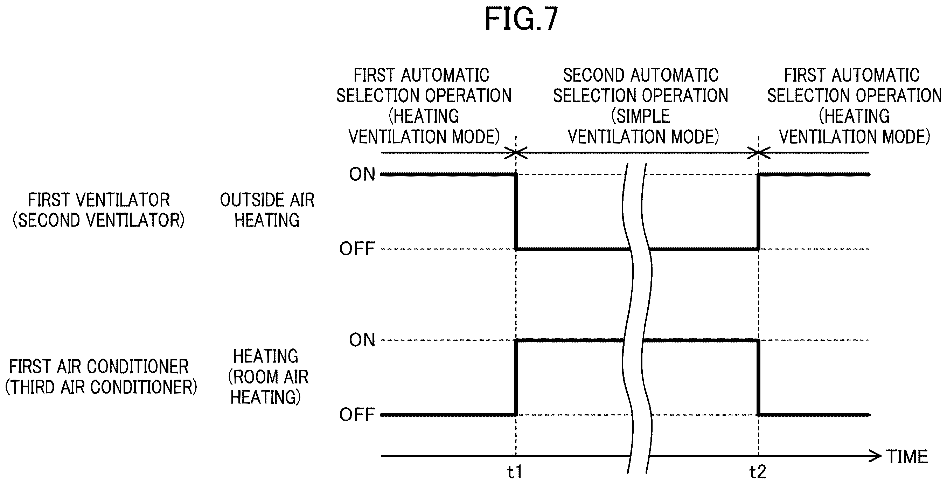

A specific example of the cooperation between the ventilating apparatus (10a, 10b) and the air conditioning apparatus (200a, 200c) in relation to the heating mode of the air conditioning apparatus (200a, 200c) will be described with reference to FIG. 7.

In the example illustrated in FIG. 7, before a time point t1, the first air conditioning apparatus (200a) is stopped, and the ventilation controller (100) of the first ventilating apparatus (10a) executes the first automatic selection operation. In this example, the temperature T measured by the temperature humidity sensor (105) is lower than the first lower reference temperature T_L1. Thus, the ventilation controller (100) executing the first automatic selection operation causes the first ventilating apparatus (10a) to execute the heating ventilation mode.

At the time point t1, when an occupant of the house (1) activates the first air conditioning apparatus (200a) to instruct the start of the heating mode, the first air conditioning apparatus (200a) starts the heating mode. The air conditioning controller (250) of the first air conditioning apparatus (200a) outputs the operation information indicating that the first air conditioning apparatus (200a) has started the heating mode. When the ventilation controller (100) of the first ventilating apparatus (10a) receives the operation information, the ventilation controller (100) ends the first automatic selection operation, and starts the second automatic selection operation.

At the time point t1 in the example illustrated in FIG. 7, the temperature T measured by the temperature humidity sensor (105) is higher than the second lower reference temperature T_L2. Thus, the ventilation controller (100) having started the second automatic selection operation changes the operating mode executed by the first ventilating apparatus (10a) from the heating ventilation mode to the simple ventilation mode. In this manner, the ventilation controller (100) changes the operation of the first ventilating apparatus (10a) according to the start of the second automatic selection operation.

At a time point t2, when the occupant of the house (1) stops the first air conditioning apparatus (200a), the first air conditioning apparatus (200a) ends the heating mode. The air conditioning controller (250) of the first air conditioning apparatus (200a) outputs the operation information indicating that the first air conditioning apparatus (200a) has ended the heating mode. When the ventilation controller (100) of the first ventilating apparatus (10a) receives the operation information, the ventilation controller (100) ends the second automatic selection operation, and starts the first automatic selection operation.

At the time point t2 in the example illustrated in FIG. 7, the temperature T measured by the temperature humidity sensor (105) is lower than the first lower reference temperature T_L1. Thus, the ventilation controller (100) having started the first automatic selection operation changes the operating mode executed by the first ventilating apparatus (10a) from the simple ventilation mode to the heating ventilation mode. In this manner, when the ventilation controller (100) receives the operation information indicating that the first air conditioning apparatus (200a) has ended the heating mode, the ventilation controller (100) returns the operating mode executed by the first ventilating apparatus (10a) to the heating ventilation mode executed by the first ventilating apparatus (10a) before the time point t1.

<Cooperation Related to Cooling Mode and Dehumidification Mode of Air conditioning apparatus>

Cooperation between the ventilating apparatus (10a, 10b) and the air conditioning apparatus (200a, 200c) in relation to the cooling mode and dehumidification mode of the air conditioning apparatus (200a, 200c) will be described in detail. Here, the cooperation between the first ventilating apparatus (10a) and the first air conditioning apparatus (200a) will be described, but the same also applies to the cooperation between the second ventilating apparatus (10b) and the third air conditioning apparatus (200c).

The air conditioning controller (250) of the first air conditioning apparatus (200a) outputs, as the operation information, the "information indicating that the first air conditioning apparatus (200a) has started the cooling mode" or the "information indicating that the first air conditioning apparatus (200a) has started the dehumidification mode" when the first air conditioning apparatus (200a) is activated and starts the cooling mode or the dehumidification mode and when the operating mode executed by the first air conditioning apparatus (200a) is switched from the mode other than the cooling mode and the dehumidification mode (for example, fan mode) to the cooling mode or the dehumidification mode.

When the ventilation controller (100) of the first ventilating apparatus (10a) receives, as the operation information, the "information indicating that the first air conditioning apparatus (200a) has started the cooling mode" or the "information indicating that the first air conditioning apparatus (200a) has started the dehumidification mode," the ventilation controller (100) performs the first automatic selection operation. In a case where the ventilation controller (100) is executing an operation other than the first automatic selection operation at the time of receiving the operation information, the ventilation controller (100) switches the operation to be executed to the first automatic selection operation. On the other hand, in a case where the ventilation controller (100) is executing the first automatic selection operation at the time of receiving the operation information, the ventilation controller (100) continuously executes the first automatic selection operation.

When the ventilation controller (100) of the first ventilating apparatus (10a) receives, as the operation information, the "information indicating that the first air conditioning apparatus (200a) has ended the cooling mode" or the "information indicating that the first air conditioning apparatus (200a) has ended the dehumidification mode," the ventilation controller (100) performs the same operation as the operation performed by the first air conditioning apparatus (200a) immediately before the start of the cooling mode or the dehumidification mode. In a case where the operation performed by the first air conditioning apparatus (200a) immediately before the start of the cooling mode or the dehumidification mode is different from the first automatic selection operation, the ventilation controller (100) ends the first automatic selection operation, and starts the operation performed by the first air conditioning apparatus (200a) immediately before the start of the cooling mode or the dehumidification mode. On the other hand, in a case where the first automatic selection operation is performed immediately before the first air conditioning apparatus (200a) starts the cooling mode or the dehumidification mode, the ventilation controller (100) continuously executes the first automatic selection operation.

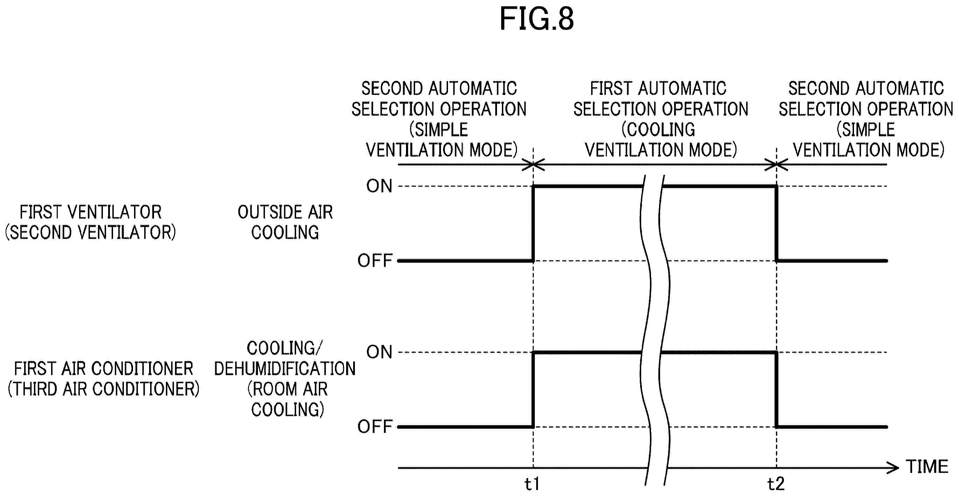

A specific example of the cooperation between the ventilating apparatus (10a, 10b) and the air conditioning apparatus (200a, 200c) in relation to the cooling mode or dehumidification mode of the air conditioning apparatus (200a, 200c) will be described with reference to FIG. 8.

In the example illustrated in FIG. 8, before a time point t1, the first air conditioning apparatus (200a) is stopped, and the ventilation controller (100) of the first ventilating apparatus (10a) executes the second automatic selection operation. In this example, the temperature T measured by the temperature humidity sensor (105) is lower than the second upper reference temperature T_U2, and the absolute humidity X calculated based on the measurement value of the temperature humidity sensor (105) is the second reference absolute humidity X2 or lower. Thus, the ventilation controller (100) executing the second automatic selection operation causes the first ventilating apparatus (10a) to execute the simple ventilation mode.

At the time point t1, when the occupant of the house (1) activates the first air conditioning apparatus (200a) to instruct the start of the cooling mode or the dehumidification mode, the first air conditioning apparatus (200a) starts the cooling mode or the dehumidification mode. The air conditioning controller (250) of the first air conditioning apparatus (200a) outputs the operation information indicating that the first air conditioning apparatus (200a) has started the cooling mode or the operation information indicating that the first air conditioning apparatus (200a) has started the dehumidification mode. When the ventilation controller (100) of the first ventilating apparatus (10a) receives the operation information, the ventilation controller (100) ends the second automatic selection operation, and starts the first automatic selection operation.

At the time point t1 in the example illustrated in FIG. 8, the temperature T measured by the temperature humidity sensor (105) is higher than the first upper reference temperature T_U1. Thus, the ventilation controller (100) having started the first automatic selection operation changes the operating mode executed by the first ventilating apparatus (10a) from the simple ventilation mode to the cooling ventilation mode. In this manner, the ventilation controller (100) changes the operation of the first ventilating apparatus (10a) according to the start of the first automatic selection operation.

At a time point t2, when the occupant of the house (1) stops the first air conditioning apparatus (200a), the first air conditioning apparatus (200a) ends the cooling mode or the dehumidification mode. The air conditioning controller (250) of the first air conditioning apparatus (200a) outputs the operation information indicating that the first air conditioning apparatus (200a) has ended the cooling mode or the operation information indicating that the first air conditioning apparatus (200a) has ended the dehumidification mode. When the ventilation controller (100) of the first ventilating apparatus (10a) receives the operation information, the ventilation controller (100) ends the first automatic selection operation, and starts the second automatic selection operation.

At the time point t2 in the example illustrated in FIG. 8, the temperature T measured by the temperature humidity sensor (105) is lower than the second upper reference temperature T_U2, and the absolute humidity X calculated based on the measurement value of the temperature humidity sensor (105) is the second reference absolute humidity X2 or lower. Thus, the ventilation controller (100) having started the second automatic selection operation changes the operating mode executed by the first ventilating apparatus (10a) from the cooling ventilation mode to the simple ventilation mode. In this manner, when the ventilation controller (100) receives the operation information indicating that the first air conditioning apparatus (200a) has ended the cooling mode or the operation information indicating that the first air conditioning apparatus (200a) has ended the dehumidification mode, the ventilation controller (100) returns the operating mode executed by the first ventilating apparatus (10a) to the simple ventilation mode executed by the first ventilating apparatus (10a) before the time point t1.

-Volumes of Indoor Heat Exchanger and Utilization-Side Heat Exchanger-

As described above, the indoor heat exchanger (225) of each of the air conditioning apparatuss (200a to 200d) and the utilization-side heat exchanger (25) of each of the ventilating apparatuss (10a, 10b) are the fin-and-tube air heat exchangers. In the air conditioning system (50) of this embodiment, the volume of the indoor heat exchanger (225) is greater than that of the utilization-side heat exchanger (25).

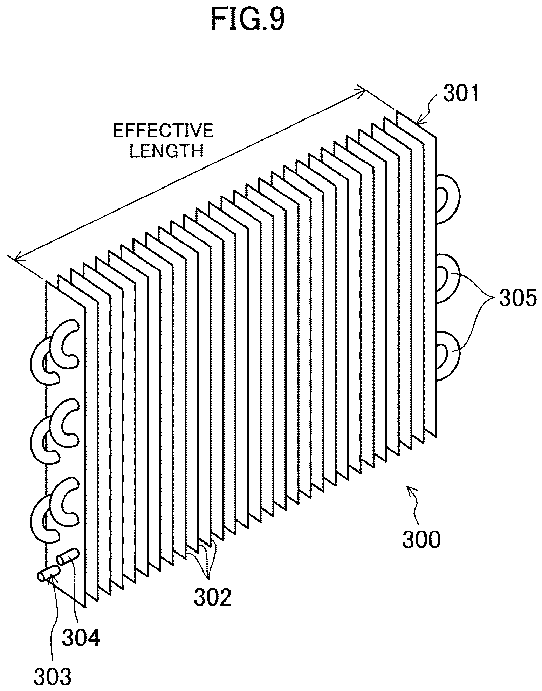

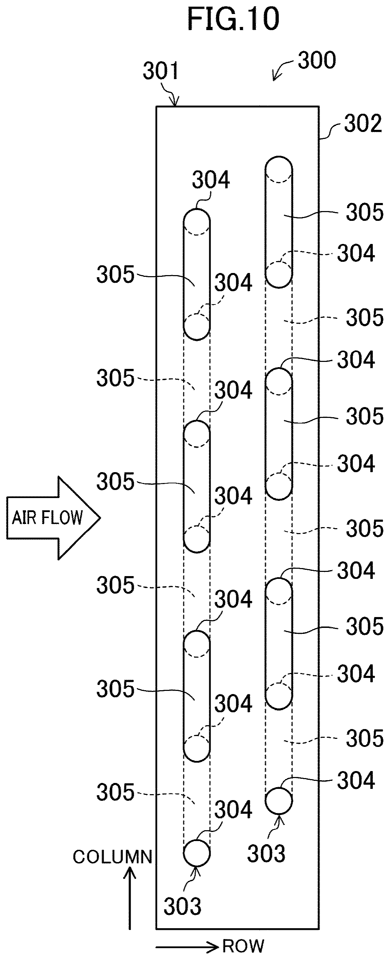

Here, the volume of a fin-and-tube air heat exchanger (300) will be described with reference to FIGS. 9 and 10. FIGS. 9 and 10 illustrate a typical fin-and-tube air heat exchanger (300).

The air heat exchanger (300) includes multiple fins (302) and multiple heat transfer tubes (303). Each of the fins (302) is formed in a plate shape. The fins (302) are disposed in a line at certain intervals. The fins (302) form a fin group (301). The heat transfer tubes (303) penetrate each of the fins (302) forming the fin group (301). The heat transfer tube (303) includes multiple straight portions (304) penetrating the fin group (301) and multiple bent portions (305) connecting the straight portions (304) adjacent to each other.

The straight portions (304) are arranged in the longitudinal direction (column direction) of the fin (302) and the width direction (row direction) of the fin (302). In the air heat exchanger (300) illustrated in FIG. 10, eight straight portions (304) are arranged in the column direction, and two straight portions (304) are arranged in the row direction. Thus, the air heat exchanger (300) illustrated in FIG. 10 is provided with sixteen straight portions (304).

The volume of the air heat exchanger (300) is the total of the internal volumes of the straight portions (304). Thus, the volume V of the air heat exchanger (300) is calculated by the following mathematical expression.

$$V = A \times L \times N$$

In the above-described mathematical expression, "A" is the cross-sectional area of the internal space of the straight portion (304), "L" is the effective length of the air heat exchanger (300), and "N" is the number of straight portions (304). As illustrated in FIG. 9, the effective length L of the air heat exchanger (300) is a length from one end to the other end of the fin group (301).

In the indoor heat exchanger (225) of this embodiment, $A = 18.3$ mm$^2$, $L = 610$ mm, and $N = 36$. Thus, the volume of the indoor heat exchanger (225) is $V = 402$ cm$^3$.

In the utilization-side heat exchanger (25) of this embodiment, $A = 37.1$ mm$^2$, $L = 330$ mm, and $N = 24$. Thus, the volume of the utilization-side heat exchanger (25) is $V = 294$ cm$^3$.

-Temperatures of Indoor Heat Exchanger and Utilization-Side Heat Exchanger-

The temperature of the indoor heat exchanger (225) is the measurement value of the heat exchanger temperature sensor (256). In a state of the air conditioning apparatus (200a, 200c) being executing the cooling mode, the measurement value of the heat exchanger temperature sensor (256) is substantially equal to the evaporation temperature of the refrigerant in the indoor heat exchanger (225).

The temperature of the utilization-side heat exchanger (25) is the measurement value of the heat exchanger temperature sensor (106). In a state of the ventilating apparatus (10a, 10b) being executing the cooling ventilation mode, the measurement value of the heat exchanger temperature sensor (106) is substantially equal to the evaporation temperature of the refrigerant in the utilization-side heat exchanger (25).

As described above, in the air conditioning system (50) of this embodiment, the first ventilating apparatus (10a) corresponds to the first air conditioning apparatus (200a), and the second ventilating apparatus (10b) corresponds to the third air conditioning apparatus (200c). In the air conditioning system (50) of this embodiment, at the same time when the ventilating apparatus (10a, 10b) executes the cooling ventilation mode, the air conditioning apparatus (200a, 200c) corresponding to the ventilating apparatus (10a, 10b) may execute the cooling mode.

For example, the first ventilating apparatus (10a) executing the cooling ventilation mode supplies the outdoor air cooled in the utilization-side heat exchanger (25) to the first habitable room (2a). The first ventilating apparatus (10a) supplies the cooled outdoor air, thereby processing part of a cooling load of the first habitable room (2a). As a result, a load processed by the first air conditioning apparatus (200a) in the cooling load of the first habitable room (2a) is reduced. Thus, the temperature of the indoor heat exchanger (225) of the first air conditioning apparatus (200a) executing the cooling mode is usually higher than the temperature of the utilization-side heat exchanger (25) of the first ventilating apparatus (10a) executing the cooling ventilation mode.

A specific example will be described. It is assumed that the temperature and relative humidity of the outdoor air in the outdoor space are 28°C and 80%, respectively, and the temperature and relative humidity of the indoor air in the first habitable room (2a) are 28°C and 60%, respectively. In this state, the temperature of the indoor heat exchanger (225) of the first air conditioning apparatus (200a) executing the cooling mode is approximately 15°C, and the temperature of the utilization-side heat exchanger (25) of the first ventilating apparatus (10a) executing the cooling ventilation mode is approximately 12°C.

-Feature (1) of Embodiment-

In the air conditioning system (50) of this embodiment, the ventilation controller (100) of each of the ventilating apparatuss (10a, 10b) changes the operation of the ventilating apparatus (10a, 10b) according to the operating mode executed by the corresponding air conditioning apparatus (200a, 200c). Thus, it is possible to operate the ventilating apparatus (10a, 10b) in an appropriate state according to the operating mode executed by the air conditioning apparatus (200a, 200c), thereby appropriately controlling the air conditioning system (50).

In particular, in the air conditioning system (50) of this embodiment, the ventilation controller (100) of each of the ventilating apparatuss (10a, 10b) changes the amount of heat exchange in the utilization-side heat exchanger (25) according to the operating mode executed by the corresponding air conditioning apparatus (200a, 200c) (see FIGS. 7 and 8). Thus, the state of the outdoor air supplied to the room by the ventilating apparatus (10a, 10b) can be appropriately adjusted according to the operating mode executed by the air conditioning apparatus (200a, 200c).

-Feature (2) of Embodiment-

In the specific example illustrated in FIG. 7, in the air conditioning system (50) of this embodiment, when the air conditioning apparatus (200a, 200c) starts the heating mode while the ventilating apparatus (10a, 10b) is executing the heating ventilation mode, the ventilation controller (100) stops the heating of the outdoor air in the utilization-side heat exchanger (25) of the ventilating apparatus (10a, 10b). In other words, the ventilation controller (100) reduces the amount of heating in the utilization-side heat exchanger (25) of the ventilating apparatus (10a, 10b) to zero.

Thus, the proportion of the load processed by the indoor heat exchanger (225) of the air conditioning apparatus (200a, 200c) to a heating load of the indoor space (5) increases, and the proportion of the load processed by the utilization-side heat exchanger (25) of the ventilating apparatus (10a, 10b) to the heating load decreases, as compared to a case where the ventilation controller (100) does not change the amount of heating in the utilization-side heat exchanger (25) of the ventilating apparatus (10a, 10b).

Here, in the air conditioning system (50) of this embodiment, the volume of the indoor heat exchanger (225) of the air conditioning apparatus (200a, 200c) is greater than that of the utilization-side heat exchanger (25) of the ventilating apparatus (10a, 10b). Generally, a heat exchanger having a greater volume has a higher heat exchange capacity. Thus, the heat exchange capacity of the indoor heat exchanger (225) of the air conditioning apparatus (200a, 200c) is higher than that of the utilization-side heat exchanger (25) of the ventilating apparatus (10a, 10b).

Usually, the greater the heat exchange capacity of the heat exchanger provided in the refrigerant circuit, the higher the coefficient of performance (COP) of the refrigeration cycle performed in the refrigerant circuit. Thus, in the air conditioning system (50) of this embodiment, the COP of the refrigeration cycle performed in the refrigerant circuit (220) of the air conditioning apparatus (200a, 200c) is higher than the COP of the refrigeration cycle performed in the refrigerant circuit (R) of the ventilating apparatus (10a, 10b).

As described above, in the specific example illustrated in FIG. 7, in the air conditioning system (50) of this embodiment, when the air conditioning apparatus (200a, 200c) starts the heating mode while the ventilating apparatus (10a, 10b) is executing the heating ventilation mode, the ventilation controller (100) stops the heating of the outdoor air in the utilization-side heat exchanger (25) of the ventilating apparatus (10a, 10b). As a result, the proportion of the load processed by the indoor heat exchanger (225) of the air conditioning apparatus (200a, 200c) having a relatively-high COP to the heating load of the indoor space (5) increases, and the proportion of the load processed by the utilization-side heat exchanger (25) of the ventilating apparatus (10a, 10b) having a relatively-low COP to the heating load decreases.

Thus, in the air conditioning system (50) of this embodiment, the air conditioning apparatus (200a, 200c) having a relatively-high COP is caused to process a great amount of heating load, thereby reducing the power consumption of the entire air conditioning system (50).

-Feature (3) of Embodiment-

In the specific example illustrated in FIG. 8, in the air conditioning system (50) of this embodiment, when the air conditioning apparatus (200a, 200c) starts the cooling mode or the dehumidification mode in a state in which the cooling of the outdoor air in the utilization-side heat exchanger (25) of the ventilating apparatus (10a, 10b) is stopped, the ventilation controller (100) starts the cooling of the outdoor air in the utilization-side heat exchanger (25).

Thus, the proportion of the load processed by the indoor heat exchanger (225) of the air conditioning apparatus (200a, 200c) to the cooling load (sensible heat load and latent heat load) of the indoor space (5) decreases, and the proportion of the load processed by the utilization-side heat exchanger (25) of the ventilating apparatus (10a, 10b) to the cooling load increases, as compared to a case where the cooling of the outdoor air in the utilization-side heat exchanger (25) of the ventilating apparatus (10a, 10b) is kept stopped.

Here, in a state in which the indoor space (5) is air-conditioned in summer, the outdoor air in the outdoor space (6) has higher temperature and humidity than those of the indoor air in the indoor space (5). Thus, the outdoor air in the outdoor space (6) has a higher dew point than that of the indoor air in the indoor space (5). Consequently, in the utilization-side heat exchanger (25) of the ventilating apparatus (10a, 10b), which exchanges heat between the outdoor air and the refrigerant, a difference between the dew point of air and the temperature of the heat exchanger is greater than that in the indoor heat exchanger (225) of the air conditioning apparatus (200a, 200c), which exchanges heat between the indoor air and the refrigerant, and the amount of condensed water generated is greater.

In particular, in the air conditioning system (50) of this embodiment, in a state in which the air conditioning apparatus (200a, 200c) executes the cooling mode or the dehumidification mode and the ventilating apparatus (10a, 10b) executes the cooling ventilation mode, the temperature of the indoor heat exchanger (225) of the air conditioning apparatus (200a, 200c) is higher than the temperature of the utilization-side heat exchanger (25) of the ventilating apparatus (10a, 10b). Thus, the proportion of the load processed by the indoor heat exchanger

(225) of the air conditioning apparatus (200a, 200c) to the cooling load (sensible heat load and latent heat load) of the indoor space (5) is relatively low, and the proportion of the load processed by the utilization-side heat exchanger (25) of the ventilating apparatus (10a, 10b) to the cooling load is relatively high.

Thus, in the air conditioning system (50) of this embodiment, the ventilating apparatus (10a, 10b) whose amount of condensed water generated is great is caused to process a great amount of latent heat load (dehumidification load), thereby reducing the power consumption of the entire air conditioning system (50).

-Feature (4) of Embodiment-

As illustrated in FIG. 7, in the air conditioning system (50) of this embodiment, when the air conditioning apparatus (200a, 200c) starts the heating mode while the ventilation controller (100) of the ventilating apparatus (10a, 10b) is executing the first automatic selection operation, the ventilation controller (100) temporarily ends the first automatic selection operation, and starts the second automatic selection operation. Thereafter, when the air conditioning apparatus (200a, 200c) ends the heating mode, the ventilation controller (100) ends the second automatic selection operation, and resumes the first automatic selection operation.

As a result of the operation performed by the ventilation controller (100) of the ventilating apparatus (10a, 10b), in the specific example illustrated in FIG. 7, when the air conditioning apparatus (200a, 200c) starts the heating mode, the ventilating apparatus (10a, 10b) ends the heating ventilation mode, and starts the simple ventilation mode. When the air conditioning apparatus (200a, 200c) ends the heating mode, the ventilating apparatus (10a, 10b) resumes the heating ventilation mode performed before the air conditioning apparatus (200a, 200c) starts the heating mode.

As illustrated in FIG. 8, in the air conditioning system (50) of this embodiment, when the air conditioning apparatus (200a, 200c) starts the cooling mode or the dehumidification mode while the ventilation controller (100) of the ventilating apparatus (10a, 10b) is executing the second automatic selection operation, the ventilation controller (100) temporarily ends the second automatic selection operation, and starts the first automatic selection operation. Thereafter, when the air conditioning apparatus (200a, 200c) ends the cooling mode or the dehumidification mode, the ventilation controller (100) ends the first automatic selection operation, and resumes the second automatic selection operation.

As a result of the operation performed by the ventilation controller (100) of the ventilating apparatus (10a, 10b), in the specific example illustrated in FIG. 8, when the air conditioning apparatus (200a, 200c) starts the cooling mode or the dehumidification mode, the ventilating apparatus (10a, 10b) ends the simple ventilation mode, and starts the cooling ventilation mode. When the air conditioning apparatus (200a, 200c) ends the cooling mode or the dehumidification mode, the ventilating apparatus (10a, 10b) resumes the simple ventilation mode performed before the air conditioning apparatus (200a, 200c) starts the cooling mode or the dehumidification mode.

-Feature (5) of Embodiment-

In the air conditioning system (50) of this embodiment, the ventilation controller (100) of the ventilating apparatus (10a, 10b) switches the operating mode executed by the ventilating apparatus (10a, 10b) based on the measurement value of the temperature humidity sensor (105). As a result, in the ventilating apparatus (10a, 10b), the amount of heat exchange in the utilization-side heat exchanger (25) is changed based on the temperature and humidity of the outdoor air flowing toward the utilization-side heat exchanger (25) after having passed through the total heat exchanger (21).

-Variation (1) of Embodiment-

In the specific example illustrated in FIG. 7, when the air conditioning apparatus (200a, 200c) starts the heating mode while the corresponding ventilating apparatus (10a, 10b) is executing the heating ventilation mode, the ventilation controller (100) of each of the ventilating apparatuss (10a, 10b) switches the operating mode executed by the ventilating apparatus (10a, 10b) from the heating ventilation mode to the simple ventilation mode.

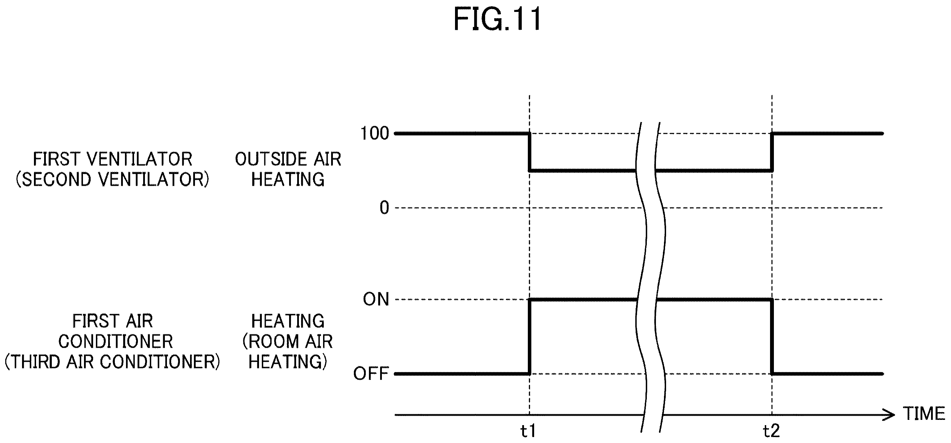

In a case where each of the ventilating apparatuss (10a, 10b) is capable of changing the rotational speed of the compressor (82), the ventilation controller (100) of the ventilating apparatus (10a, 10b) may perform a control operation such as illustrated in FIG. 11, instead of the above-described control operation.

Numbers "100" and "0" in FIG. 11 indicate the operating state of the compressor (82) of the ventilating apparatus (10a, 10b). "100" indicates that the rotational speed of the compressor (82) is the highest value. "0" indicates that the compressor (82) is stopped.

As illustrated in FIG. 11, when the air conditioning apparatus (200a, 200c) starts the heating mode while the corresponding ventilating apparatus (10a, 10b) is executing the heating ventilation mode, the ventilation controller (100) of each of the ventilating apparatuss (10a, 10b) may perform a control operation of decreasing the rotational speed of the compressor (82) of the ventilating apparatus (10a, 10b). In a case where the ventilation controller (100) performs this control operation, when the air conditioning apparatus (200a, 200c) starts the heating mode while the corresponding ventilating apparatus (10a, 10b) is executing the heating ventilation mode, the amount of heating in the utilization-side heat exchanger (25) of the ventilating apparatus (10a, 10b) is reduced.

-Variation (2) of Embodiment-

The air conditioning system (50) of this embodiment may be configured to be capable of switching the cooperation of each of the ventilating apparatuss (10a, 10b) with the air conditioning apparatus (200a to 200d). Specifically, the air conditioning system (50) may be switchable between a state in which the first ventilating apparatus (10a) cooperates with the first air conditioning apparatus (200a) and a state in which the first ventilating apparatus (10a) cooperates with the second air conditioning apparatus (200b). Moreover, the air conditioning system (50) may be switchable between a state in which the second ventilating apparatus (10b) cooperates with the third air conditioning apparatus (200c) and a state in which the second ventilating apparatus (10b) cooperates with the fourth air conditioning apparatus (200d).

-Variation (3) of Embodiment-

The air conditioning system (50) of this embodiment may be configured such that each of the ventilating apparatuss (10a, 10b) cooperates with the air conditioning apparatuss (200a to 200d). Specifically, the first ventilating apparatus (10a) may cooperate with both the first air conditioning apparatus (200a) and the second air conditioning apparatus (200b). Moreover, the second ventilating apparatus (10b) may cooperate with both the third air conditioning apparatus (200c) and the fourth air conditioning apparatus (200d).

A case where the first ventilating apparatus (10a) cooperates with both the first air conditioning apparatus (200a) and the second air conditioning apparatus (200b) will be described as an example. When either the first air conditioning apparatus (200a) or the second air conditioning apparatus (200b) starts the heating mode while the ventilation controller (100) of the first ventilating apparatus (10a) is executing the first automatic selection operation, the ventilation controller (100) of the first ventilating apparatus (10a) ends the first automatic selection operation, and starts the second automatic selection operation. When either the first air conditioning apparatus (200a) or the second air conditioning apparatus (200b) starts the cooling mode or the dehumidification mode while the ventilation controller (100) of the first ventilating apparatus (10a) is executing the second automatic selection operation, the ventilation controller (100) of the first ventilating apparatus (10a) ends the second automatic selection operation, and starts the first automatic selection operation.

-Variation (4) of Embodiment-

In the air conditioning system (50) of this embodiment, the first indoor unit (212a) and the second indoor unit (212b) on the first floor of the house (1) may be connected to one outdoor unit. Similarly, the third indoor unit (212c) and the fourth indoor unit (212d) on the second floor of the house (1) may be connected to one outdoor unit.

-Variation (5) of Embodiment-

In the air conditioning system (50) of this embodiment, the ventilation controller (100) of the ventilating apparatus (10a, 10b) changes the operation of the ventilating apparatus (10a, 10b) according to the operating mode executed by the corresponding air conditioning apparatus (200a, 200c).

The air conditioning system (50) of this embodiment may include, separately from the ventilation controller (100) and the air conditioning controller (250), a control device configured to perform the operation of "changing the operation of the ventilating apparatus (10a, 10b) according to the operating mode executed by the air conditioning apparatus (200a, 200c)." The control device may be provided in the house (1) in which the air conditioning system (50) is placed. Alternatively, the control device may be placed at a location away from the house (1) and configured to communicate with the ventilation controller (100) and the air conditioning controller (250) via a communication line such as the Internet.

While the embodiments and variations thereof have been described above, it will be understood that various changes in form and details may be made without departing from the spirit and scope of the claims. The embodiments, the variation thereof, and the other embodiments may be combined and replaced with each other without deteriorating intended functions of the present disclosure. The expressions of "first," "second," and "third" described above are used to distinguish the terms to which these expressions are given, and do not limit the number and order of the terms.

INDUSTRIAL APPLICABILITY

As described above, the present disclosure is useful for an air conditioning system.

DESCRIPTION OF REFERENCE CHARACTERS

| | |
|---|---|
| 10a | First Ventilating Apparatus |
| 10b | Second Ventilating Apparatus |
| 21 | Total Heat Exchanger (First Heat Exchanger) |
| 25 | Utilization-Side Heat Exchanger (Second Heat Exchanger) |
| 50 | Air Conditioning System |
| 100 | Ventilation Controller (Controller) |
| 105 | Temperature Humidity Sensor (Sensor) |
| 200a | First Air Conditioning Apparatus |
| 200b | Second Air Conditioning Apparatus |
| 200c | Third Air Conditioning Apparatus |
| 200d | Fourth Air Conditioning Apparatus |
| 225 | Indoor Heat Exchanger (Third Heat Exchanger) |

**Claims**

1.   An air conditioning system comprising:

a ventilating apparatus (10a, 10b) that has a first heat exchanger (21) configured to exchange heat between outdoor air and indoor air and a second heat exchanger (25) configured to exchange heat between the outdoor air having passed through the first heat exchanger (21) and a heat medium and that is configured to supply the outdoor air to a room and discharge the indoor air to an outside of the room, an air conditioning apparatus (200a, 200c) that has a third heat exchanger (225) configured to exchange heat between the indoor air and the heat medium and that is configured to be capable of executing multiple operating modes, and a controller (100) configured to change an operation of the ventilating apparatus (10a, 10b) according to an operating mode executed by the air conditioning apparatus (200a, 200c).

2.   The air conditioning system of claim 1, wherein the controller (100) changes an amount of heat exchange in the second heat exchanger (25) of the ventilating apparatus (10a, 10b) according to the operating mode executed by the air conditioning apparatus (200a, 200c).

3.   The air conditioning system of claim 2, wherein

the operating mode executable by the air conditioning apparatus (200a, 200c) includes a room air heating mode in which the indoor air is heated in the third heat exchanger (225),

the ventilating apparatus (10a, 10b) is capable of executing an outside air heating mode in which the outdoor air is heated in the second heat exchanger (25), and

when the air conditioning apparatus (200a, 200c) starts the room air heating mode while the ventilating apparatus (10a, 10b) is executing the outside air heating mode, the controller (100) decreases an amount of heating in the second heat exchanger (25) of the ventilating apparatus (10a, 10b), or stops heating of the outdoor air in the second heat exchanger (25).

4. The air conditioning system of claim 2, wherein

the operating mode executable by the air conditioning apparatus (200a, 200c) includes a room air cooling mode in which the indoor air is cooled in the third heat exchanger (225), and

when the air conditioning apparatus (200a, 200c) starts the room air cooling mode in a state in which cooling of the outdoor air in the second heat exchanger (25) of the ventilating apparatus (10a, 10b) is stopped, the controller (100) causes the second heat exchanger (25) to start cooling the outdoor air.

5. The air conditioning system of claim 1, wherein

the operating mode executable by the air conditioning apparatus (200a, 200c) includes a room air cooling mode in which the indoor air is cooled in the third heat exchanger (225),

the ventilating apparatus (10a, 10b) is capable of executing an outside air cooling mode in which the outdoor air is cooled in the second heat exchanger (25), and

in a state in which the air conditioning apparatus (200a, 200c) executes the room air cooling mode and the ventilating apparatus (10a, 10b) executes the outside air cooling mode, a temperature of the third heat exchanger (225) is higher than a temperature of the second heat exchanger (25).

6. The air conditioning system of any one of claims 1 to 5, wherein
a volume of the third heat exchanger (225) of the air conditioning apparatus (200a, 200c) is greater than a volume of the second heat exchanger (25) of the ventilating apparatus (10a, 10b).

7. The air conditioning system of any one of claims 1 to 6, wherein
even when the air conditioning apparatus (200a, 200c) is stopped while the ventilating apparatus (10a, 10b) is operating, the controller (100) continuously operates the ventilating apparatus (10a, 10b).

8. The air conditioning system of claim 7, wherein after the air conditioning apparatus (200a, 200c) has been stopped, the controller (100) causes the ventilating apparatus (10a, 10b) to execute an operation identical to an operation executed by the ventilating apparatus (10a, 10b) before activation of the air conditioning apparatus (200a, 200c).

9. The air conditioning system of any one of claims 1 to 8, wherein

the ventilating apparatus (10a, 10b) includes a sensor (105) configured to measure a temperature and a humidity of the outdoor air flowing toward the second heat exchanger (25) after having passed through the first heat exchanger (21), and

the controller (100) changes an amount of heat exchange in the second heat exchanger (25) based on a measurement value of the sensor (105).

FIG.1

EP 4 692 666 A1

# FIG.2

# FIG.3

# FIG.4

EP 4 692 666 A1

# FIG.5

255 INDOOR TEMPERATURE SENSOR

256 HEAT EXCHANGER TEMPERATURE SENSOR

105 TEMPERATURE HUMIDITY SENSOR

106 HEAT EXCHANGER TEMPERATURE SENSOR

250 AIR CONDITIONING CONTROLLER

250a MICROCOMPUTER

250b MEMORY DEVICE

100 VENTILATION CONTROLLER

100a MICROCOMPUTER

100b MEMORY DEVICE

COMPRESSOR 221

SWITCHING MECHANISM 222

EXPANSION VALVE 224

COMPRESSOR 82

SWITCHING MECHANISM 84

EXPANSION VALVE 85

EP 4 692 666 A1

# FIG.6A

FIRST AUTOMATIC SELECTION OPERATION

| | |
|---|---|
| $T > T\_U1$ | COOLING VENTILATION MODE |
| $T\_L1 \leqq T \leqq T\_U1,\ X > X1$ | |
| $T\_L1 \leqq T \leqq T\_U1,\ X \leqq X1$ | SIMPLE VENTILATION MODE |
| $T < T\_L1$ | HEATING VENTILATION MODE |

# FIG.6B

SECOND AUTOMATIC SELECTION OPERATION

| | |
|---|---|
| $T > T\_U2$ | COOLING VENTILATION MODE |
| $T\_L2 \leqq T \leqq T\_U2,\ X > X2$ | |
| $T\_L2 \leqq T \leqq T\_U2,\ X \leqq X2$ | SIMPLE VENTILATION MODE |
| $T < T\_L2$ | HEATING VENTILATION MODE |

# FIG.7

EP 4 692 666 A1

# FIG.8

FIRST VENTILATOR
(SECOND VENTILATOR)

OUTSIDE AIR
COOLING

FIRST AIR CONDITIONER
(THIRD AIR CONDITIONER)

COOLING/
DEHUMIDIFICATION
(ROOM AIR
COOLING)

SECOND AUTOMATIC
SELECTION OPERATION
(SIMPLE
VENTILATION MODE)

FIRST AUTOMATIC
SELECTION OPERATION
(COOLING
VENTILATION MODE)

SECOND AUTOMATIC
SELECTION OPERATION
(SIMPLE
VENTILATION MODE)

EP 4 692 666 A1

# FIG.9

# FIG.10

# FIG.11

FIRST VENTILATOR
(SECOND VENTILATOR)    OUTSIDE AIR
HEATING

FIRST AIR
CONDITIONER
(THIRD AIR CONDITIONER)    HEATING
(ROOM AIR
HEATING)

## INTERNATIONAL SEARCH REPORT

| International application No. |
| --- |
| **PCT/JP2024/019867** |

### A. CLASSIFICATION OF SUBJECT MATTER

*F24F 11/77*(2018.01)i; *F24F 7/06*(2006.01)i; *F24F 7/007*(2006.01)i; *F24F 7/08*(2006.01)i; *F24F 11/83*(2018.01)i; *F24F 11/86*(2018.01)i

FI: F24F11/77; F24F11/86; F24F11/83; F24F7/007 B; F24F7/06 L; F24F7/08 A; F24F7/08 101J

According to International Patent Classification (IPC) or to both national classification and IPC

### B. FIELDS SEARCHED

Minimum documentation searched (classification system followed by classification symbols)

F24F11/77; F24F7/06; F24F7/007; F24F7/08; F24F11/83; F24F11/86

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2016/002072 A1 (MITSUBISHI ELECTRIC CORPORATION) 07 January 2016 (2016-01-07) paragraphs [0013]-[0062] | 1-2, 6-9 |
| A | | 3-5 |

| ☐ Further documents are listed in the continuation of Box C. | ☑ See patent family annex. |
| --- | --- |

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 June 2024** | **23 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/019867**

| Patent document cited in search report | Publication date (day/month/year) | Patent family member(s) | Publication date (day/month/year) |
|---|---|---|---|
| WO 2016/002072 A1 | 07 January 2016 | US 2017/0097165 A1 paragraphs [0024]-[0072] EP 3165843 A1 CN 106461256 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2012172961 A